Europäisches Patentamt

(19) European Patent Office

Office européen des brevets

(11) Publication number: **0 240 204**
**A2**

(12) **EUROPEAN PATENT APPLICATION**

(21) Application number: **87302341.0**

(22) Date of filing: **18.03.87**

(51) Int. Cl.⁴: **H02K 37/02 , H02K 41/03**

(30) Priority: **03.04.86 US 847730**

(43) Date of publication of application:
**07.10.87 Bulletin 87/41**

(84) Designated Contracting States:
**DE FR GB IT SE**

(71) Applicant: **ADEPT TECHNOLOGY, INC.**
**150 Rose Orchard Way**
**San Jose California 95134(US)**

(72) Inventor: **Taenzer, Jon Charles**
**3666 South Court**
**Palo Alto California 94306(US)**

(74) Representative: **Horton, Andrew Robert Grant**
**et al**
**BOULT, WADE & TENNANT 27 Furnival Street**
**London, EC4A 1PQ(GB)**

(54) **Variable reluctance stepper motor.**

(57) A variable reluctance stepper motor comprises a stator having a plurality of evenly spaced salient poles (II) carrying windings (I3) such that every other pole of the same phase is of opposite polarity and an armature having poles (I2) such that the spacing between alternate armature poles is equal to the spacing between adjacent stator poles of the same phase and opposite polarity (IIA-I,IIA-2).

*FIG_1*

# VARIABLE RELUCTANCE STEPPER MOTOR

## BACKGROUND OF THE INVENTION

The present invention relates generally to variable reluctance motors and more particularly to a variable reluctance high torque stepper motor.

Variable reluctance stepper motors include a stator or stators made up of laminations of magnetic material such as soft iron having a number of poles with inductive windings wound on the poles and a movable member of laminated magnetic material, generally a rotor, having poles which cooperate with the stator poles to provide low reluctance magnetic paths for the magnetic flux generated by the stator winding. Movement of the movable member is controlled by cyclically and sequentially energizing the stator winding to provide a moving flux. The movable member assumes successive positions of least reluctance for the magnetic field and moves with the flux. Motors of this type obtain maximum efficiency and torque when the reluctance at the stable holding position is minimized.

High efficiency, high torque motors are particularly useful in connection with robotics, process and fabrication equipment, positioning tables and other applications where accurate positioning and high linear or rotary forces are required at relatively low speeds.

## OBJECTS AND SUMMARY OF THE INVENTION

It is an object of the present invention to provide an improved variable reluctance stepper motor.

It is another object of the present invention to provide a variable reluctance stepper motor for directly driving loads such as robotic heads, process and fabrication equipment, positioning tables and the like.

It is another object of the present invention to provide a variable reluctance motor with short low reluctance magnetic paths and high utilization of the magnetic poles of the rotor.

It is another object of the invention to provide a multiphase variable reluctance motor with multiple stator poles for every two rotor poles wherein many short magnetic circuits are formed in a pattern which repeats. For example, in a three-phase variable reluctance motor of this design, many short magnetic circuits are formed in a pattern which repeats every four rotor poles or six stator poles.

It is another object of the invention to provide a motor which can be configured as a single stator and single rotor with either inside or outside stator; a three-part unit with both inside and outside stators; a pancake motor with dish-shaped rotor and one or two stators, or a linear motor with one or more stators.

There is provided a variable reluctance motor comprising a stator and a movable member; said stator including a plurality of equally spaced stator poles, windings on each of said stator poles for magnetizing the stator poles so that every other stator pole of the same phase is of opposite polarity; said movable member including a plurality of equally spaced member poles positioned to cooperate with the stator poles, said member poles being spaced so that the spacing between alternate member poles is equal to the spacing between adjacent stator poles of the same phase whereby the member poles can align with the stator poles of opposite polarity to provide a low reluctance flux path from one stator pole to the adjacent stator pole of opposite polarity.

## BRIEF DESCRIPTION OF THE DRAWINGS

The foregoing and other objects of the invention will be more clearly understood from the following description taken in conjunction with the accompanying drawings, in which:

Figure 1 is a partial view of a motor in accordance with the invention.

Figure 2 is a schematic view showing the stator pole windings for a three-phase motor.

Figure 3 shows a cylindrical linear motor, in accordance with the invention.

Figure 4 shows a single stator linear motor in accordance with the invention.

Figure 5 shows a rotary motor with one stator on the outside of the rotor.

Figure 6 shows a dual stator version of the motor of Figure 5.

Figure 7 shows a single stator pancake version of the motor.

Figure 8 is an enlarged view taken along the line 8-8 of Figure 7.

Figure 9 is a side elevational view of the portion shown in Figure 8.

Figure 10 is an enlarged view taken along the line 10-10 of Figure 7.

Figure 11 is a side elevational view of Figure 10.

## DETAILED DESCRIPTION

Figure I shows a portion of a motor in accordance with the invention. Four stator poles II and three rotor poles I2 are shown. Phase A is energized by applying current to the windings I3 wound on the poles IIA-I and IIA-2. It is seen that there is a low reluctance path for the magnetic flux I4 through the stator and through alternate poles of the rotor from one energized stator pole IIA-I to the next adjacent energized stator pole IIA-2 of the same phase but opposite polarity. Every third stator pole is energized by a coil connected in series with the coil of all other poles of that phase to form a phase winding. In Figure I the poles forming Phase A are shown with their respective coils. Half of the coils wound on the Phase C poles are also shown to indicate how adjacent coils would be placed. The coils associated with the other poles have been omitted for clarity. When Phase A is energized, every other Phase A pole is of north magnetic polarity and the rest of the Phase A poles are of south magnetic polarity as shown in Figure I. This makes the magnetic circuits short and thus reduces the magnetic reluctance of each magnetic circuit. The result of low reluctance is a strong magnetic field strength for a given magneto motive force (MMF), i.e., better efficiency. The magnetic circuits with Phase A energized are indicated by the dash lines in Figure I.

To produce the alternating pole polarity for each phase, the motor is wound with coils of alternating sense. Thus, when Phase A is energized, the upper pole shown in Figure I would have current flowing clockwise in that Phase A coil when viewed from the rotor end of the coil. The lower pole in Figure I has current flowing counter clockwise. This is shown by the dots of current entering the wire and the plus symbol for current exiting the wire. Adjacent poles of the same phase are of opposite magnetic polarity.

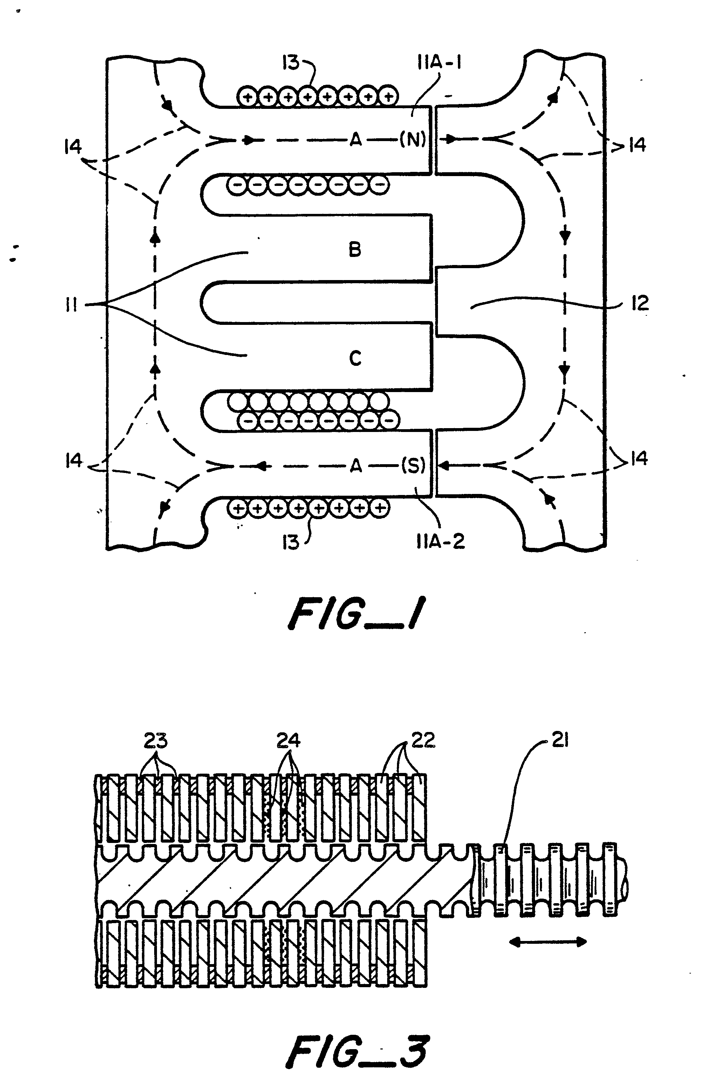

To achieve this alternating polarity, the coils are wound as schematically shown in Figure 2, where the coils are viewed from the rotor end and only one turn per coil is shown for clarity. Thus, for example, the coil on the first pole of Phase A is wound counter-clockwise while the coil on the next pole is wound clockwise. This makes every other pole of each phase of the same polarity. Similarly, the upper pole for Phase C is wound clockwise, the next is counter-clockwise, etc. Phase B is likewise wound with consecutive poles of alternate sense.

The operation of the motor requires that the phases be energized sequentially. Referring to Figure I, it is assumed that Phase A of the motor is energized as shown in Figure I. The rotor poles line up exactly with Phase A poles of the stator providing low relectance. If Phase A is then deenergized and Phase B energized, the rotor will be driven upward as the middle pole of the rotor tries to align with the Phase B stator pole. When the rotor has moved to that point, the lower rotor pole will be midway between the Phase C stator pole and the lower Phase A stator pole. Phase B is then deenergized and Phase C energized; the rotor will again be driven upwards until alignment of the lower rotor pole with Phase C stator pole is achieved. Phase C is then deenergized, Phase A again energized and the rotor will continue to be driven upward until alignment of the middle rotor pole with the upper Phase A pole is achieved. At this time the rotor will have moved one rotor pole in position. The above described sequence is then repeated. Electronic drive circuits for sequentially energizing the phase windings are known in the art.

Figure 3 shows a cylindrical linear motor. The driven or movable member is a grooved rod 2I shown partly in section. The stator is composed of a stack of steel washers 22 with steel spacers 23 and pancake windings 24 between the washers. Operation of the motor for linear motion is as described with reference to Figures I and 2 with successive phases being sequentially energized and deenergized whereby to provide a force which causes the movable member to move and align its poles with the poles of adjacent energized Phase A, B or C stator poles.

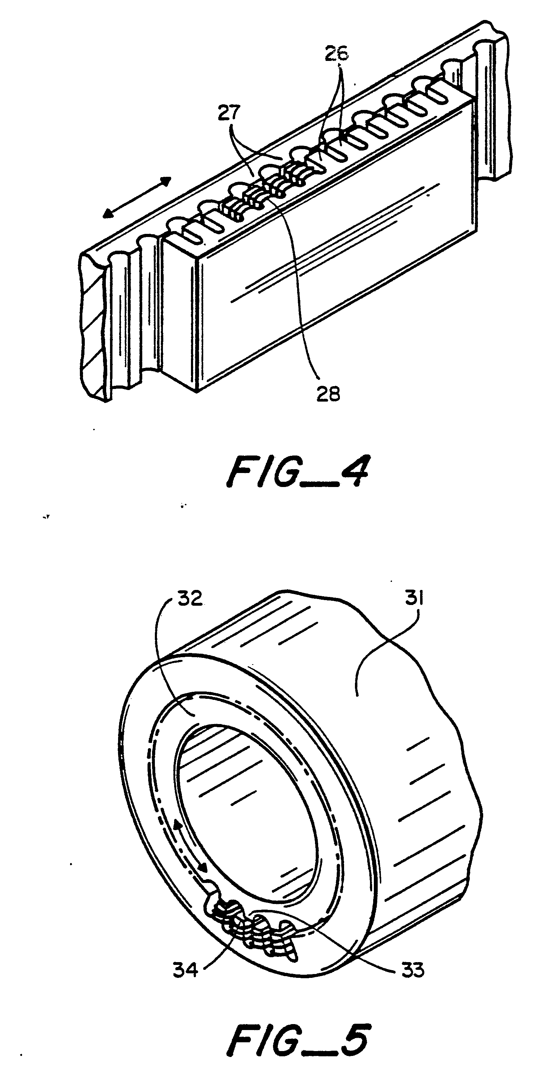

Figure 4 is a perspective view of a single stator linear motor of rectilinear configuration. The movable member and stator are formed of a plurality of stacked laminations which are stamped and assembled to form a plurality of spaced stator and movable member poles 26, 27. Windings 28 are provided on the stator and energized in the manner described with respect to Figure I whereby to cause the linear member to move in a given direction depending upon the energization of the series connected three-phase windings. By forming poles on the rear of the movable members and using a second stator similar to the one shown, twice the force can be generated. If the movable member were a hollow or solid triangle or of square cross-section, then three or four stators could be used respectively to cooperate with the facing poles of the movable member and the force could be further increased. This, of course, could be continued to eventually become a full circular motor such as the one shown in Figure 3.

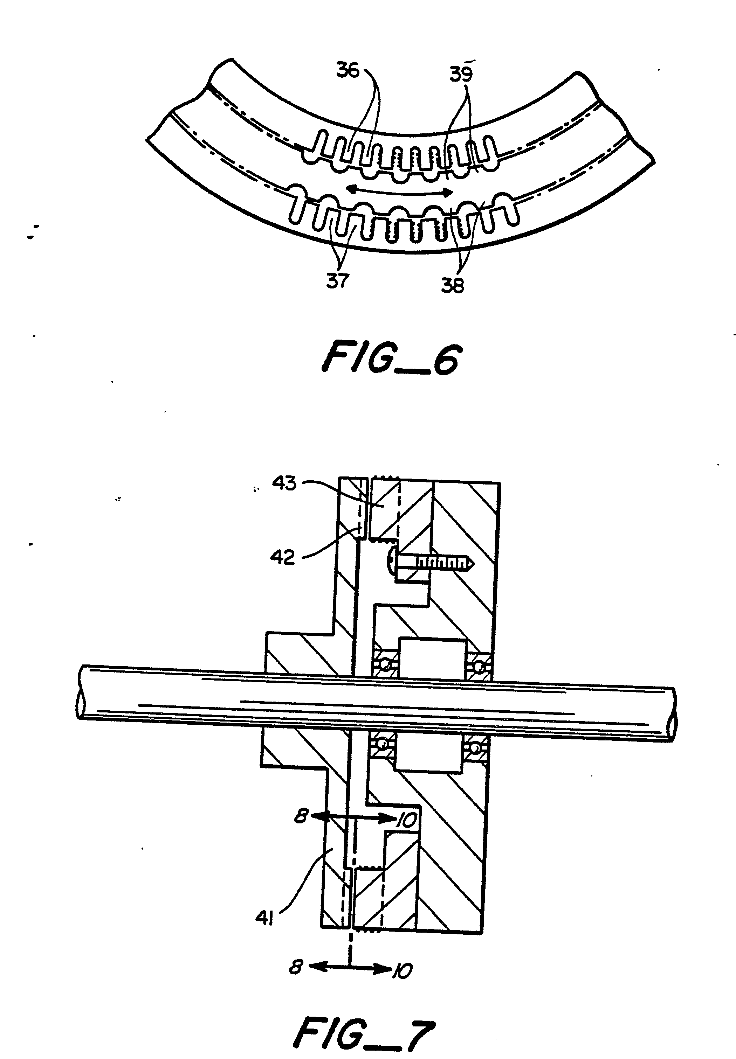

Figure 5 shows a rotary motor composed of stacked laminations with one stator 3I on the outside of the rotor 32. The motor is cylindrically symmetrical and can be of any length or diameter to provide additional torque. Although the poles 33 in the rotor and 34 in the stator completely encircle their respective parts, only a few poles are shown for clarity. A single stator configuration with inside stator and outside rotor can also be constructed. Figure 6 shows a small segment of a similar motor with a dual stator having poles 36 and 37 and a rotor having outwardly and inwardly facing poles 38 and 39, cooperating with the stator poles.

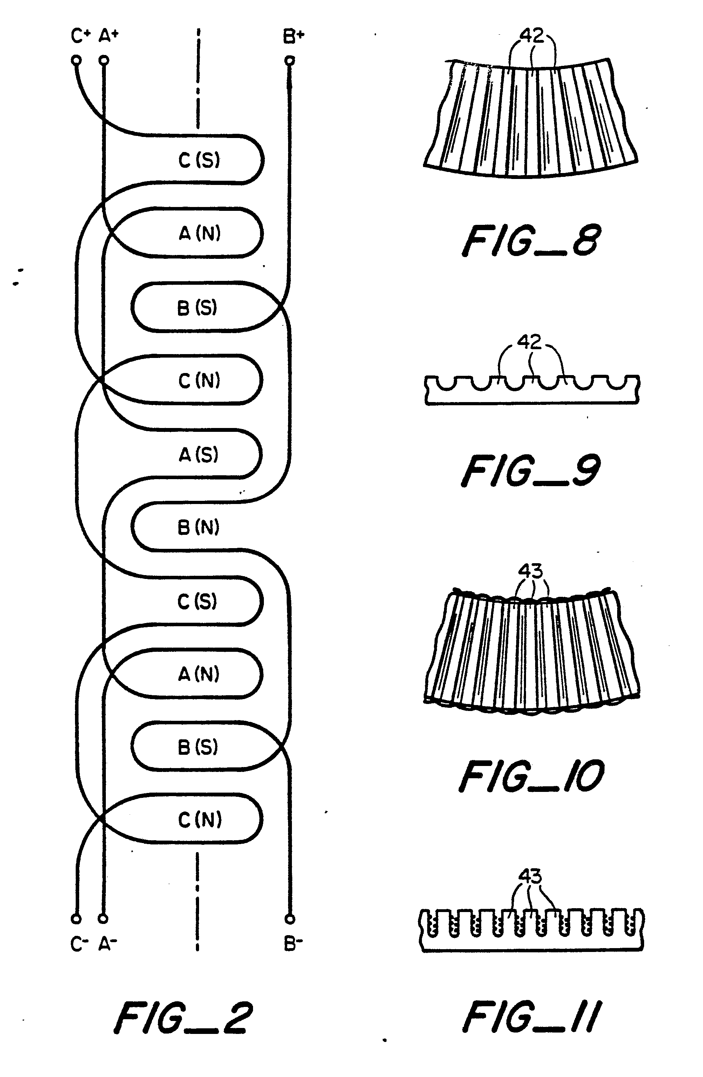

Figure 7 shows a single stator pancake version of the motor. Here again, a dual stator version with pancake rotor between can be constructed. More particularly, the pancake motor of Figure 7 includes a rotor 4l having rotor poles 42 shown in Figures 8 and 9 and a stator having wound rotor poles 43 as shown in Figures l0 and ll.

## Claims

l. A variable reluctance motor comprising a stator and a movable member

said stator including a plurality of equally spaced stator poles

windings on each of said stator poles for magnetizing the stator poles so that every other stator pole of the same phase is of opposite polarity

said movable member including a plurality of equally spaced movable member poles positioned to cooperate with the stator poles, said movable member poles being spaced so that the spacing between alternate movable member poles is equal to the spacing between adjacent stator poles of the same phase and opposite polarity whereby the member poles can align with the stator poles of opposite polarity to provide a low reluctance flux path from one stator pole to the adjacent stator pole of opposite polarity.

2. A variable reluctance motor as in Claim l wherein the stator is a linear member and the movable member is a linear member which moves along a straight line.

3. A variable reluctance motor as in Claim 2 wherein the stator is a cylindrical member and the movable member is a rod surrounded by the cylindrical member.

4. A variable reluctance motor as in Claim l in which the stator is a cylindrical member and the movable member is a rotor adapted to rotate with respect to the stator.

5. A variable reluctance motor as in Claim l in which the stator comprises outer and inner cylindrical members with inwardly and outwardly facing poles and said movable member is a rotor disposed between said outer and inner stator cylindrical members with outwardly and inwardly facing poles cooperating with the outer and inner stator poles.

6. A variable reluctance motor as in Claim l in which said stator is a pancake stator with axially extending stator poles and said movable member is a pancake member with axially extending stator poles cooperating with the rotor poles.

7. A variable reluctance motor as in Claim l which includes a pair of linear stators with poles facing each other and said movable member is disposed between said stators and includes poles extending axially from each side in cooperation with the stator poles.

8. A variable reluctance motor comprising a stator and a movable member

said stator including a plurality of equally spaced stator poles

three phase windings with one phase wound on every third stator pole with alternating winding sense for magnetizing the stator poles so that every other stator pole of the same phase is of opposite polarity

said movable member including a plurality of equally spaced movable member poles positioned to cooperate with the stator poles, said movable member poles being spaced so that the spacing between alternate movable member poles is equal to the spacing between adjacent stator poles of the same phase and opposite polarity whereby the member poles can align with the stator poles of opposite polarity to provide a low reluctance flux path from one stator pole to the adjacent stator pole of opposite polarity.

9. A variable reluctance motor as in Claim 8 wherein the stator is a linear member and the movable member is a linear member which moves along a straight line.

l0. A variable reluctance motor as in Claim 8 wherein the stator is a cylindrical member and the movable member is a rod surrounded by the cylindrical member.

ll. A variable reluctance motor as in Claim 8 in which the stator is a cylindrical member and the movable member is a rotor adapted to rotate with respect to the stator.

l2. A variable reluctance motor as in Claim 8 in which the stator comprises outer and inner cylindrical members with inwardly and outwardly facing poles and said movable member is a rotor disposed between said outer and inner stator cylindrical members with outwardly and inwardly facing poles cooperating with the outer and inner stator poles.

13. A variable reluctance motor as in Claim 8 in which said stator is a pancake stator with axially extending stator poles and said movable member is a pancake member with axially extending stator poles cooperating with the rotor poles.

14. A variable reluctance motor as in Claim 13 which includes a pair of stators with poles facing each other and said movable member is disposed between said stators and includes poles extending axially from each side in cooperation with the stator poles.

FIG__1

FIG__3

FIG_4

FIG_5

36   39

37   38

*FIG_6*

43

42

8   10

41

8   10

*FIG_7*

0 240 204

C+ A+  B+

C (S)

A (N)

B (S)

C (N)

A (S)

B (N)

C (S)

A (N)

B (S)

C (N)

C- A-  B-

*FIG_2*

42

*FIG_8*

42

*FIG_9*

43

*FIG_10*

43

*FIG_11*